# EUROPÄISCHE PATENTSCHRIFT

(11) **EP 2 786 833 B1**
(45) Veröffentlichungstag und Bekanntmachung des Hinweises auf die Patenterteilung: **27.02.2019**
(21) Anmeldenummer: 14161475.0
(22) Anmeldetag: 25.03.2014
(51) Int. Cl.: B23K 26/00, B23K 26/14, B23K 26/34, B23K 26/30, C03C 17/06, H05B 6/12

(54) **Verfahren zu einer Herstellung zumindest einer Hausgerätevorrichtung und Hausgerätevorrichtung**
Method for manufacturing at least one domestic appliance and domestic appliance
Procédé de fabrication d'au moins un dispositif d'appareil ménager et dispositif d'appareil ménager

(30) Priorität: 04.04.2013 ES 201330481
(43) Veröffentlichungstag der Anmeldung: 08.10.2014
(73) Patentinhaber: BSH Hausgeräte GmbH, 81739 München (DE)
(72) Erfinder: Alaman Aguilar, Jorge, 50008 Zaragoza (ES); Bunuel Magdalena, Miguel Angel, 50017 Zaragoza (ES); Escartin Barduzal, Andres, 50009 Zaragoza (ES); Ester Sola, Francisco Javier, 50001 Zaragoza (ES); Ocaña Moreno, Jose Luis, 28029 Madrid (ES); Perez Cabeza, Pilar, 50008 Zaragoza (ES); Peña Torre, José Ignacio, 50004 Zaragoza (ES); Planas Layunta, Fernando, 50009 Zaragoza (ES)

(56) Entgegenhaltungen:
- EP-A1- 0 432 653
- US-A1- 2012 125 314
- US-A1- 2012 199 564

## Beschreibung

Die Erfindung betrifft ein Verfahren zu einer Herstellung zumindest einer Hausgerätevorrichtung nach dem Patentanspruch 1.

Aus der europäischen Patentanmeldung EP 0 432 653 A1 ist bereits eine Großflächendekore aus Glasuren, keramischer Farbe und dergleichen auf Glaskeramik, Glas, Keramik oder ähnlichen schmelzbaren Substraten, insbesondere auf Glaskeramikkochflächen, bekannt, welche nach dem Verfahren mittels eines Laserstrahls, der linienförmig über die gesamte Breite der zu dekorierenden Fläche aufgeweitet ist, sozusagen in einem Zonenschmelzverfahren, aufgebracht werden. Die linienförmige Energiezufuhrzone wird hierbei so schnell weitergeführt, dass im Wesentlichen nur das Dekormaterial aufgeschmolzen oder eingebrannt wird, die Wärmeleitungsfront sich aber nicht wesentlich in das Substratmaterial hineinverlagert.

Die Aufgabe der Erfindung besteht insbesondere darin, ein Verfahren zu einer Herstellung zumindest einer Hausgerätevorrichtung mit verbesserten mechanischen und/oder chemischen Eigenschaften bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Es wird ein Verfahren zu einer Herstellung zumindest einer Hausgerätevorrichtung mit zumindest einer Platteneinheit, die an einer Oberfläche zumindest einen Teilbereich umfasst, wobei der Teilbereich zumindest durch Aufschmelzen mittels Laser bearbeitet wird, vorgeschlagen. Unter einer "Platteneinheit" soll insbesondere eine Einheit verstanden werden, die eine Dicke aufweist, die wesentlich kleiner ist als eine Breite und/oder eine Länge der Einheit. Unter einer "Dicke" der Einheit soll insbesondere ein Minimum unter den maximalen Ausdehnungen der Einheit entlang beliebiger Raumrichtungen verstanden werden. Unter einer "maximalen Ausdehnung" einer Einheit entlang einer Raumrichtung soll insbesondere die maximale Länge aller Strecken verstanden werden, die zwei Randpunkte der Einheit verbinden und parallel zu der Raumrichtung verlaufen. Unter einer "Breite" und einer "Länge" der Einheit sollen insbesondere die maximalen Ausdehnungen der Einheit entlang von zwei Raumrichtungen verstanden werden, die zumindest im Wesentlichen senkrecht zueinander stehen und vorzugsweise zumindest im Wesentlichen senkrecht zu einer Raumrichtung stehen, entlang der die Einheit als maximale Ausdehnung die Dicke aufweist. Insbesondere sind Länge und Breite der Einheit die maximalen Ausdehnungen entlang von Raumrichtungen, für die die Summe der maximalen Ausdehnungen maximal sind. Insbesondere weist die Platteneinheit eine Dicke von mehr als 0,5 mm, insbesondere von mehr als 1 mm und vorteilhaft von mehr als 2 mm auf. Die Platteneinheit ist als Kochfeldplatte ausgebildet. Alternativ ist die Platteneinheit als eine Tür eines Gargeräts ausgebildet. Unter einem "Aufschmelzen" zumindest eines Stoffs soll insbesondere eine Erhitzung des Stoffs auf eine Temperatur, die größer ist als 70 %, insbesondere größer als 80 % und vorteilhaft größer als 90 % einer Schmelztemperatur des Stoffs, verstanden werden. Insbesondere wird der Stoff bei dem Aufschmelzen auf eine Temperatur größer oder gleich der Schmelztemperatur des Stoffs erhitzt. Insbesondere ist der Stoff vor dem Aufschmelzen ein Festkörper und nach dem Ausschmelzen ein Fluid, insbesondere eine Flüssigkeit und/oder ein Plasma. Insbesondere wird durch Aufschmelzen und anschließendes Abkühlen des Stoffs zumindest eine chemische Eigenschaft und/oder zumindest eine mechanische Eigenschaft des Stoffs verändert. Insbesondere wird durch Aufschmelzen und anschließendes Abkühlen zumindest eine Härte und/oder zumindest eine Mikrostruktur des Stoffs verändert. Insbesondere unterscheidet sich der Stoff nach erfolgtem Aufschmelzen und Abkühlen in zumindest einer chemischen Eigenschaft und/oder zumindest einer mechanischen Eigenschaft des Stoffs von dem Stoff vor dem Aufschmelzen. Insbesondere ist eine Größe der Mikrostruktur bei einem, insbesondere durch zumindest eine Abkühlung erzeugten Übergang zwischen dem fluiden Zustand in zumindest einen festen Zustand des Stoffs von einer Kristallbildung abhängig. Insbesondere ist die Kristallbildung proportional zu zumindest einer Geschwindigkeit eines Abkühlvorgangs und/oder zu zumindest einer Geschwindigkeit eines Aufheizens mittels des Lasers und/oder zu zumindest einer Geschwindigkeit, mittels der der Laserstrahl über den Stoff bewegt wird und/oder zu zumindest einer Wärmeverteilung zumindest eines von dem Laser erzeugten Laserstrahls. Unter "x % einer Temperatur" soll insbesondere ein Wert verstanden werden, der x % eines in Kelvin angegebenen Betrags der Temperatur beträgt. Unter einem "Laser" soll insbesondere eine Einheit mit zumindest einem Lasermedium verstanden werden, die dazu vorgesehen ist, durch Anregung von Atomen des Lasermediums zumindest einen Laserstrahl zu erzeugen. Unter einem "Laserstrahl" soll insbesondere eine mittels des Lasers erzeugte, kohärente elektromagnetische Strahlung verstanden werden, die zumindest eine Vielzahl an Photonen mit zumindest im Wesentlichen gleicher Energie, insbesondere Wellenlänge, und/oder Phasenlage aufweist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung können insbesondere mittels eines Verfahrens zu einer Herstellung der Hausgerätevorrichtung vorteilhafte mechanische und/oder chemische Eigenschaften der Hausgerätevorrichtung erzeugt werden. Zudem kann vorteilhaft das Verfahren auf eine Vielzahl verschiedener Hausgerätevorrichtungen angewandt werden. Zudem kann der mittels Laser zu bearbeitende Teilbereich flexibel gewählt werden, wodurch ein hohes Maß an Flexibilität erreicht werden kann. Durch Verwendung eines Lasers kann vorteilhaft eine bereits bekannte Technik angewandt werden, wodurch geringe Produktionskosten erreicht werden können. Zudem kann vorteilhaft die Platteneinheit in dem Teilbereich der Oberfläche dekoriert und/oder mit vorteilhaften optischen Eigenschaften versehen werden.

In dem Teilbereich wird die Platteneinheit aufgeschmolzen. Insbesondere wird die Platteneinheit auf zumindest eine erste Temperatur von mehr als 70 % einer Schmelztemperatur der Platteneinheit und vorteilhaft von weniger als 100 % der Schmelztemperatur der Platteneinheit erhitzt. Insbesondere werden in einem Bereich einer Oberfläche der Platteneinheit mittels der ersten Temperatur und anschließendem, insbesondere raschem Abkühlen mechanische Spannungen, insbesondere Oberflächenspannungen, vorteilhaft Druckspannungen, erzeugt. Alternativ ist denkbar, dass die Platteneinheit auf zumindest eine zweite Temperatur gleich oder größer der Schmelztemperatur der Platteneinheit erhitzt wird. Ebenfalls denkbar ist, dass ein erster Teilbereich der Platteneinheit auf die erste Temperatur erhitzt sowie anschließend abgekühlt wird und dass ein zweiter Teilbereich der Platteneinheit auf die zweite Temperatur erhitzt sowie anschließend abgekühlt wird. Insbesondere wird eine Dicke von mehr als 30 µm, insbesondere von mehr als 50 µm und vorteilhaft von mehr als 100 µm der Platteneinheit aufgeschmolzen. Insbesondere wird eine Dicke von weniger als 700 µm, insbesondere von weniger als 500 µm und vorteilhaft von weniger als 400 µm der Platteneinheit aufgeschmolzen. Insbesondere wird die Platteneinheit auf eine Temperatur von mehr als 400°C, insbesondere von mehr als 450°C und vorteilhaft von mehr als 500°C erhitzt. Insbesondere wird die Platteneinheit auf eine Temperatur von weniger als 2000°C, insbesondere von weniger als 1500°C und vorteilhaft von weniger als 1000°C erhitzt. Dadurch kann vorteilhaft eine Platteneinheit mit verbesserten mechanischen und/oder chemischen Eigenschaften erreicht werden.

In den Teilbereich wird neues Material eingebracht. Insbesondere weist das neue Material eine elektrische Leitfähigkeit von mehr als 1 * 10⁻⁴ S/m, insbesondere von mehr als 1 * 10° S/m und vorteilhaft von mehr als 1* 10² S/m auf. Insbesondere ist das neue Material zumindest ein Metall. Beispielsweise umfasst das neue Material Stahl, Eisen, Gold, Silber, Kupfer und/oder Edelstahl. Alternativ sind weitere, einem Fachmann als sinnvoll erscheinende neue Materialien denkbar. Insbesondere ist das neue Material zu einer Farbgebung vorgesehen. Beispielsweise umfasst das neue Material zumindest eine Keramik, beispielsweise Emaille. Alternativ sind weitere, einem Fachmann als sinnvoll erscheinende neue Materialien denkbar. Dadurch kann vorteilhaft der Teilbereich durch Wahl geeigneter Materialien flexibel und in einfacher Weise ausgestaltet werden.

Das neue Material, insbesondere in Form zumindest eines Pulvers, wird in zumindest einen von dem Laser erzeugten Laserstrahl hineingesprüht. Insbesondere wird das Material mittels einer Düse in den Laserstrahl hinein geblasen. Insbesondere trifft das Material auf den Laserstrahl, bevor das Material in den Teilbereich gelangt. Alternativ ist denkbar, dass das neue Material auf eine Stelle der Oberfläche geblasen wird, auf der der Laserstrahl auf die Oberfläche trifft. Dadurch kann vorteilhaft auf konstruktiv einfache Weise das in den Teilbereich eingebrachte neue Material bearbeitet werden.

Das neue Material wird mittels Laser aufgeschmolzen . Insbesondere wird das neue Material auf eine Temperatur gleich oder größer einer Schmelztemperatur des neuen Materials erhitzt. Insbesondere wird das neue Material als neue Schicht auf den Teilbereich aufgebracht. Insbesondere weist die Schicht eine Dicke von mehr als 10 µm, insbesondere von mehr als 50 µm und vorteilhaft von mehr als 100 µm auf. Insbesondere weist die Schicht eine Dicke von weniger als 1000 µm, insbesondere von weniger als 700 µm und vorteilhaft von weniger als 500 µm auf. Insbesondere wird das neue Material auf eine Temperatur von mehr als 500°C, insbesondere von mehr als 1000°C und vorteilhaft von mehr als 1500°C erhitzt. Insbesondere wird das neue Material auf eine Temperatur von weniger als 3500°C, insbesondere von weniger als 2500°C und vorteilhaft von weniger als 2000°C erhitzt. Alternativ ist denkbar, dass das neue Material in zumindest eine aufgeschmolzene Oberfläche der Platteneinheit eingebettet wird. Dadurch kann insbesondere eine Schicht mit verbesserten mechanischen und/oder chemischen Eigenschaften erreicht werden, wodurch der Teilbereich beispielsweise vor Korrosion und/oder Abnutzung geschützt werden kann.

Zudem wird vorgeschlagen, dass der Teilbereich großflächig mittels Laser bearbeitet wird. Unter der Wendung, dass der Teilbereich "großflächig" mittels Laser bearbeitet wird, soll insbesondere verstanden werden, dass der Teilbereich über eine Fläche von mehr als 10 cm x 10 cm, insbesondere von mehr als 30 cm x 30 cm, vorteilhaft von mehr als 50 cm x 50 cm und bevorzugt von mehr als 60 cm x 60 cm mittels Laser bearbeitet wird. Insbesondere wird der Teilbereich über eine Fläche von mehr als 100 cm x 60 cm mittels Laser bearbeitet. Dadurch kann vorteilhaft die Platteneinheit großflächig mit vorteilhaften mechanischen und/oder chemischen Eigenschaften ausgestattet werden, wodurch geringe Produktionskosten erreicht werden können. Zudem kann vorteilhaft ein homogenes Aussehen und/oder ein guter Schutz aufgrund verbesserter mechanischer und/oder chemischer Eigenschaften erreicht werden. Weiterhin kann vorteilhaft eine kurze Bearbeitungszeit erreicht werden.

Weiterhin wird vorgeschlagen, dass in dem Teilbereich eine Strukturgröße von weniger als 100 µm, insbesondere von weniger als 50 µm, vorteilhaft von weniger als 30 µm und bevorzugt von weniger als 10 µm, erzeugt wird. Unter einer "Strukturgröße" soll insbesondere zumindest eine Rasterung zumindest einer aufgebrachten Struktur in zumindest einer Richtung verstanden werden. Insbesondere ist die Strukturgröße der aufgebrachten Struktur begrenzt durch unterschiedlich farbige und/oder kontrastierte angrenzende Bestandteile der aufgebrachten Struktur. Insbesondere definiert die Strukturgröße zumindest eine geometrische Abmessung zumindest eines Bestandteils der aufgebrachten Struktur nach einer Bearbeitung. Insbesondere weist die aufgebrachte Struktur nach einer Bearbeitung eine Vielzahl an Bestandteilen mit der Strukturgröße auf. Dadurch kann vorteilhaft in dem Teilbereich eine Anzeige zumindest einer Information und/oder zumindest einer Dekoration und/oder zumindest eines Symbols erzeugt werden. Zudem kann vorteilhaft eine hohe Flexibilität hinsichtlich einer Gestaltungsfreiheit erreicht werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Hausgerät mit einer erfindungsgemäßen Hausgerätevorrichtung in einer schematischen Draufsicht,
- Fig. 2: einen Ausschnitt der erfindungsgemäßen Hausgerätevorrichtung aus Fig. 1 bei einer Herstellung mittels eines erfindungsgemäßen Verfahrens und
- Fig. 3: einen Ausschnitt der erfindungsgemäßen Hausgerätevorrichtung aus Fig. 1 bei einer Herstellung mittels eines weiteren Ausführungsbeispiels eines erfindungsgemäßen Verfahrens.

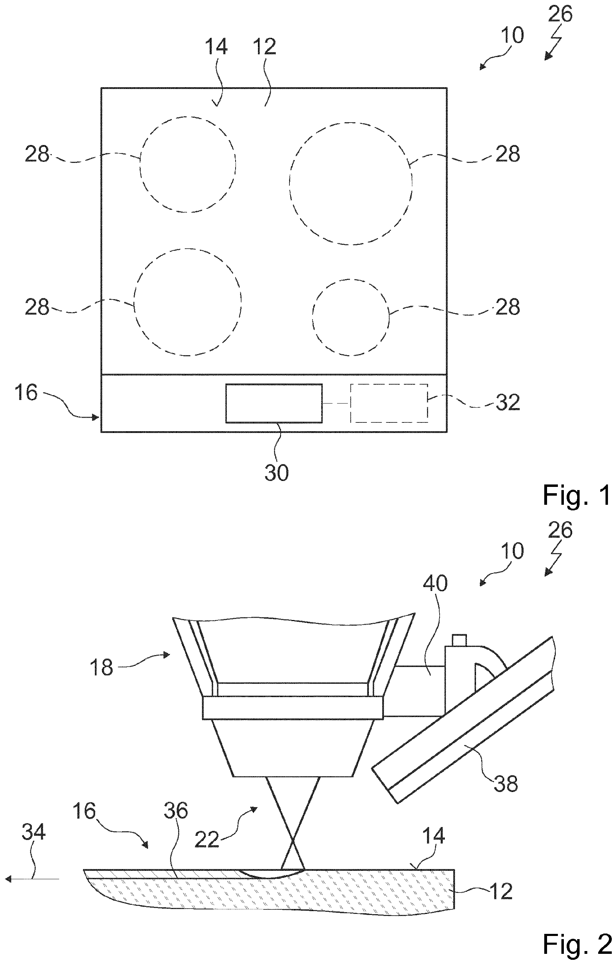

Fig. 1 zeigt ein erfindungsgemäßes Hausgerät 26, das als ein Kochfeld ausgebildet ist, mit einer erfindungsgemäßen Hausgerätevorrichtung 10, die als eine Kochfeldvorrichtung ausgebildet ist. Alternativ zu einer Ausbildung als Kochfeld könnte das Hausgerät 26 als Backofen, Mikrowellengerät, Kühlschrank, Gefrierschrank, Waschmaschine, Trockner und/oder Spülmaschine ausgebildet sein. Ebenfalls denkbar sind weitere, einem Fachmann als sinnvoll erscheinende Hausgeräte. Die Hausgerätevorrichtung 10 weist eine Platteneinheit 12 zu einem Aufstellen von Gargeschirren auf. Die Platteneinheit 12 ist als eine Kochfeldplatte ausgebildet. Die Hausgerätevorrichtung 10 weist vier Heizeinheiten 28 auf, die unterhalb der Platteneinheit 12 angeordnet sind. Die Heizeinheiten 28, die als Induktionsheizeinheiten ausgebildet sind, sind jeweils dazu vorgesehen, ein auf der Platteneinheit 12 oberhalb einer der Heizeinheiten 28 aufgestelltes Gargeschirr zu erhitzen. Jede der Heizeinheiten 28 bildet eine eigenständige Heizzone zu einem Erhitzen eines aufgestellten Gargeschirrs aus. Die Hausgerätevorrichtung 10 weist in einem in eingebautem Zustand einem Bediener zuweisenden Bereich eine Bedieneinheit 30 zu einer Eingabe von Betriebsparametern auf. Beispielsweise sind die Betriebsparameter als Auswahl und/oder Veränderung einer Heizzone und/oder als eine Einstellung einer Heizleistung und/oder Heizleistungsdichte einer Heizzone ausgebildet. Weiterhin weist die Hausgerätevorrichtung 10 eine Steuereinheit 32 auf, die dazu vorgesehen ist, in Abhängigkeit der mittels der Bedieneinheit 30 eingegebenen Betriebsparameter Aktionen auszuführen und/oder Einstellungen zu verändern.

Die Hausgerätevorrichtung 10 ist in einem erfindungsgemäßen Verfahren hergestellt. Die Platteneinheit 12 der Hausgerätevorrichtung 10 umfasst an einer Oberfläche 14 einen Teilbereich 16. In dem Verfahren zu einer Herstellung der Hausgerätevorrichtung 10 wird der Teilbereich 16 durch Aufschmelzen mittels Laser 18 bearbeitet. Der Laser 18 umfasst eine Abtastvorrichtung sowie einen galvanometrischen Spiegel. Hierdurch sind mittels Laser 18 Dekorationen und/oder Figuren erzeugbar. Der Laser 18 wird in halbkontinuierlichem Betriebsmodus mit Pulsen im Bereich von Millisekunden betrieben. Alternativ könnte der Laser in kontinuierlichem Betriebsmodus betrieben werden. Der Laser 18 erzeugt einen Laserstrahl 22, mittels dem der Teilbereich 16 durch Aufschmelzen bearbeitet wird. Der Laserstrahl 22 ist in einem Winkel von im Wesentlichen 90° relativ zu dem Teilbereich 16 ausgerichtet. In Abhängigkeit eines Stoffs, aus dem der Teilbereich 16 ausgebildet ist, werden unterschiedliche Wellenlängen für den Laserstrahl 22 verwendet. Im Fall eines metallischen Teilbereichs 16 könnten beispielsweise Wellenlängen von im Wesentlichen 1064 nm und/oder von im Wesentlichen 10600 nm verwendet werden. Im Fall eines Teilbereichs 16 aus Kunststoff könnten beispielsweise Wellenlängen von im Wesentlichen 900 nm und/oder von im Wesentlichen 1064 nm verwendet werden.

Mittels des erfindungsgemäßen Verfahrens wird der Teilbereich 16 großflächig mittels Laser 18 bearbeitet. Hierbei ist eine mittels Laser 18 bearbeitete Fläche des Teilbereichs 16 von einer Materialart des Teilbereichs 16 abhängig. Bei einem metallischen Teilbereich 16 sind beispielsweise Flächen von 80 cm x 60 cm erreichbar. Bei einem keramischen Teilbereich 16 sind beispielsweise Flächen von mehr als 100 cm x 60 cm erreichbar. In dem Teilbereich 16 wird eine Strukturgröße von weniger als 100 µm erzeugt. Eine in dem bearbeitenden Teilbereich 16 erzeugte Strukturgröße hängt von einer Materialart eines zu bearbeitenden Stoffs sowie einer gewählten Abkühlrate ab. Beispielsweise sind Abkühlraten in einem Bereich zwischen 10 K/s und 300 K/s denkbar. Im vorliegenden Fall wird eine Abkühlrate von 30 K/s verwendet.

Das erfindungsgemäße Verfahren ist auf Platteneinheiten aus Metall und/oder auf Platteneinheiten aus Keramik, wie beispielsweise Glas, und/oder auf Platteneinheiten aus Kunststoff anwendbar. Beispielsweise könnte das erfindungsgemäße Verfahren auf jegliche Glasscheiben eines Hausgeräts angewendet werden. Zudem könnte das erfindungsgemäße Verfahren auf metallische Oberflächen, insbesondere auf Oberflächen aus Eisen, angewendet werden. Ebenfalls denkbar ist eine Anwendung des erfindungsgemäßen Verfahrens auf ein Außengehäuse, insbesondere eine Frontfläche, einer Waschmaschine, einer Geschirrspülmaschine, einer Gefriertruhe und/oder eines Backofens. Bei dem als Kochfeld ausgebildeten Hausgerät 26 könnte das erfindungsgemäße Verfahren auf eine aus einer Glaskeramik gebildete Platteneinheit 12 eines Kochfelds mit Induktionsheizeinheiten und/oder mit Strahlheizkörpern angewendet werden. Zudem könnte das erfindungsgemäße Verfahren bei einer metallischen Platteneinheit eines Gaskochfelds angewendet werden.

Fig. 2 zeigt ein erstes Ausführungsbeispiel des erfindungsgemäßen Verfahrens. Hierbei wird in dem Teilbereich 16 die Platteneinheit 12 aufgeschmolzen. Mittels des Lasers 18 wird ein Laserstrahl 22 erzeugt, der in dem Teilbereich 16 auf die Platteneinheit 12 gerichtet wird. In dieser Situation wird die Platteneinheit 12 in einer Bewegungsrichtung 34 unter dem konstanten Laserstrahl 22 bewegt. Hierdurch wird ein sich unter dem Laserstrahl 22 befindlicher Anteil der Platteneinheit 12 aufgeschmolzen. Nach Passieren des Laserstrahls 22 und somit nach erfolgtem Aufschmelzen wird der bearbeitete Anteil der Platteneinheit 12 abgekühlt. Durch Aufschmelzen und anschließendes Abkühlen werden in dem Teilbereich 16 mechanische Spannungen, beispielsweise Oberflächenspannungen, erzeugt, um eine Härte in dem Teilbereich 16 zu erhöhen. Nach erfolgter Abkühlung weist die Platteneinheit 12 in dem Teilbereich 16 eine Oberflächenschicht 36 mit sich von der Platteneinheit 12 unterscheidenden chemischen und mechanischen Eigenschaften auf. Hierbei weist die Oberflächenschicht 36 eine höhere Härte als übrige Bereiche der Platteneinheit 12 auf. Die Oberflächenschicht 36 weist eine andere Struktur als die Platteneinheit 12 auf. Die Oberflächenschicht 36 ist einstückig mit der Platteneinheit 12 und aus derselben Materialart wie die Platteneinheit 12 ausgebildet. Die Oberflächenschicht 36 der Platteneinheit 12 weist eine Dicke von im Wesentlichen 250 µm auf. Zusätzlich ist denkbar, dass die Platteneinheit 12 in dem Teilbereich 16 vor einem Aufschmelzen mittels Laser 18 vorgewärmt wird, wobei beispielsweise ein Ofen und/oder ein weiterer Laser verwendet werden könnte.

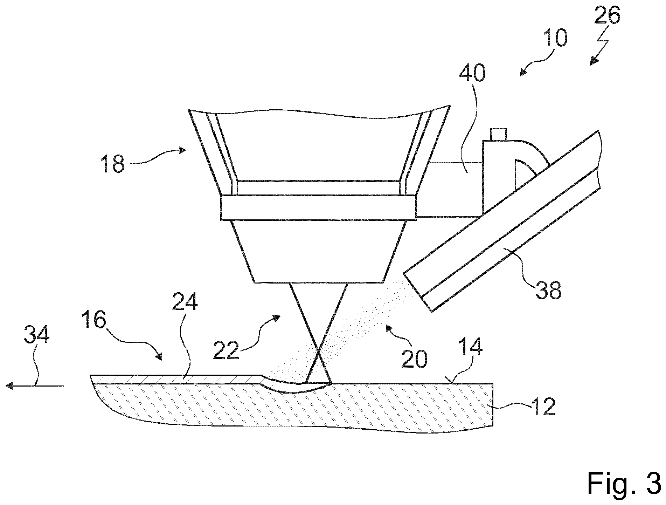

Fig. 3 zeigt ein weiteres Ausführungsbeispiel des erfindungsgemäßen Verfahrens. Hierbei wird in den Teilbereich 16 neues Material 20 eingebracht. An dem Laser 18 ist mittels eines Verbindungselements 40 eine Düse 38 angebracht. In der Düse 38 wird das neue Material 20 gelagert und auf einen Überdruck gebracht. Durch den Überdruck wird dem neuen Material 20 kinetische Energie zugeführt, durch welche das neue Material 20 in den Teilbereich 16 eingebracht wird. Das neue Material 20 wird mittels der kinetischen Energie aus der Düse 38 herausgesprüht. Die Düse 38 ist in einem Winkel von im Wesentlichen 35° relativ zu dem Teilbereich 16 angeordnet. Somit trifft das aus der Düse 38 herausgesprühte neue Material 20 unter einem Winkel von im Wesentlichen 35° auf den Teilbereich 16 auf.

Zu einem Einbringen des neuen Materials 20 in den Teilbereich 16 wird zunächst mittels des Lasers 18 ein Laserstrahl 22 erzeugt, der in dem Teilbereich 16 auf die Platteneinheit 12 gerichtet wird. In dieser Situation wird die Platteneinheit 12 in einer Bewegungsrichtung 34 unter dem konstanten Laserstrahl 22 bewegt. Das neue Material 20 wird in den von dem Laser 18 erzeugten Laserstrahl 22 hineingesprüht. Hierbei wird das neue Material 20 mittels dem Laser 18 aufgeschmolzen. Das neue Material 20 wird aus der Düse 38 heraus mittels der kinetischen Energie, die dem neuen Material 20 in der Düse 38 zugeführt wurde, in den Laserstrahl 22 hineingesprüht. Hierbei wird das neue Material 20 unter einem Winkel von im Wesentlichen 55° relativ zu dem Laserstrahl 22 in den Laserstrahl 22 hineingesprüht. Das neue Material 20 trifft, bevor es in dem Teilbereich 16 angekommen ist, auf den Laserstrahl 22, mittels dem das neue Material 20 aufgeschmolzen wird. Somit gelangt das neue Material 20 in aufgeschmolzenem Zustand in den Teilbereich 16. Aufgrund der hohen kinetischen Energie passiert das neue Material 20 den Laserstrahl 22. Anschließend trifft das neue Material 20 in aufgeschmolzenem Zustand die Oberfläche 14 der Platteneinheit 12, wobei das neue Material 20 bezüglich der Bewegungsrichtung 34 auf einen Abschnitt der Oberfläche 14 der Platteneinheit 12 auftrifft, den der Laserstrahl 22 bereits passiert und erhitzt hat. In dem Teilbereich 16 lagert sich das neue Material 20 auf der Oberfläche 14 der Platteneinheit 12 ab, welche sich durch den Laserstrahl 22 in erhitztem Zustand befindet. Hierbei ist die Platteneinheit 12 auf eine Temperatur kleiner als eine Schmelztemperatur der Platteneinheit 12 erhitzt. Alternativ ist denkbar, dass die Platteneinheit mittels Laser aufgeschmolzen wird, insbesondere auf eine Temperatur gleich oder größer als die Schmelztemperatur der Platteneinheit erhitzt wird.

Das sich in dem Teilbereich 16 befindliche, aufgeschmolzene neue Material 20 wird zusammen mit der Platteneinheit 12 abgekühlt. Nach erfolgter Abkühlung bildet das neue Material 20 in dem Teilbereich 16 eine neue Schicht 24 aus. Somit wird das neue Material 20 als neue Schicht 24 in den Teilbereich 16 aufgebracht. Hierbei bedeckt die neue Schicht 24 aus dem neuen Material 20 die Oberfläche 14 der Platteneinheit 12. Die neue Schicht 24 weist eine Dicke von im Wesentlichen 400 µm auf. Zudem weist die neue Schicht 24 eine im Vergleich zu der Platteneinheit 12 größere Härte auf. Die neue Schicht 24 ist aus einer von der Platteneinheit 12 getrennt ausgebildeten Materialart gebildet. Alternativ ist denkbar, dass das neue Material in aufgeschmolzenem Zustand in den Teilbereich eingebracht wird, wobei sich das neue Material auf der Oberfläche der Platteneinheit, die sich ebenfalls in aufgeschmolzenem Zustand befindet, vereint und zusammen mit der Oberfläche der Platteneinheit eine neue Schicht in dem Teilbereich ausbildet. Zusätzlich zu einem Erhitzen der Platteneinheit mittels des Lasers ist denkbar, dass die Platteneinheit in dem Teilbereich vor einem Einbringen des neuen Materials vorgewärmt wird, wobei beispielsweise ein Ofen und/oder ein weiterer Laser verwendet werden könnte.

In Abhängigkeit einer Materialart der Platteneinheit 12 wird unterschiedliches neues Material 20 in den Teilbereich 16 eingebracht. Bei einer metallischen Platteneinheit könnte metallisches neues Material, beispielsweise Aluminium, Stahl und/oder Edelstahl, in den Teilbereich eingebracht werden. Zudem könnte keramisches neues Material, beispielsweise Aluminiumoxid, Zirkoniumoxid, Siliziumoxid, Magnesiumoxid und/oder Calciumoxid, in den Teilbereich eingebracht werden. Bei einer Platteneinheit aus Keramik könnte beispielsweise metallisches und/oder keramisches neues Material eingebracht werden, wobei dieselben Materialien wie bei einer metallischen Platteneinheit denkbar wären. Aufgrund einer chemischen Verträglichkeit würden hierbei keramische neue Materialien bevorzugt werden. Bei einer Platteneinheit aus Kunststoff wird neues Material aus Kunststoff in den Teilbereich eingebracht.

### Bezugszeichen

- 10: Hausgerätevorrichtung
- 12: Platteneinheit
- 14: Oberfläche
- 16: Teilbereich
- 18: Laser
- 20: Neues Material
- 22: Laserstrahl
- 24: Schicht
- 26: Hausgerät
- 28: Heizeinheit
- 30: Bedieneinheit
- 32: Steuereinheit
- 34: Bewegungsrichtung
- 36: Oberflächenschicht
- 38: Düse
- 40: Verbindungselement

## Patentansprüche

1. Verfahren zu einer Herstellung zumindest einer Hausgerätevorrichtung (10) mit zumindest einer Platteneinheit (12), die als Kochfeldplatte oder als eine Tür eines Gargeräts ausgebildet ist und die an einer Oberfläche (14) zumindest einen Teilbereich (16) umfasst, wobei der Teilbereich (16) zumindest durch Aufschmelzen mittels Laser (18) bearbeitet wird, wobei in den Teilbereich (16) neues Material (20) eingebracht wird, und wobei das neue Material (20) in zumindest einen von dem Laser (18) erzeugten Laserstrahl (22) hineingesprüht wird, wobei in dem Teilbereich (16) die Platteneinheit (12) aufgeschmolzen wird und/oder das neue Material (20) mittels Laser (18) aufgeschmolzen wird.

2. Verfahren nach Anspruch 1, wobei das neue Material (20) mittels Laser (18) aufgeschmolzen wird, **dadurch gekennzeichnet, dass** das neue Material (20) als neue Schicht (24) auf den Teilbereich (16) aufgebracht wird.

3. Verfahren nach einem der vorhergehenden Ansprüche, **dadurch gekennzeichnet, dass** der Teilbereich (16) großflächig mittels Laser (18) bearbeitet wird.

4. Verfahren nach einem der vorhergehenden Ansprüche, **dadurch gekennzeichnet, dass** in dem Teilbereich (16) eine Strukturgröße von weniger als 100 µm erzeugt wird.

## Claims

1. Method for manufacturing at least one household appliance apparatus (10) with at least one plate unit (12), which is embodied as a cooktop plate or as a door of a cooking appliance and which comprises at least one subregion (16) on a surface (14), wherein the subregion (16) is treated at least by fusing via laser (18), wherein new material (20) is introduced into the subregion (16), and wherein the new material (20) is sprayed in using at least one laser beam (22) generated by the laser (18), wherein the plate unit (12) is fused in the subregion (16) and/or the new material (20) is fused via laser (20).

2. Method according to claim 1, wherein the new material (20) is fused via laser (20), **characterised in that** the new material (20) is applied to the subregion (16) as a new layer (24).

3. Method according to one of the preceding claims, **characterised in that** the subregion (16) is largely treated via laser (18).

4. Method according to one of the preceding claims, **characterised in that** in the subregion (16) a structure size of less than 100 µm is generated.

## Revendications

1. Procédé de fabrication d'au moins un dispositif formant appareil ménager (10) muni d'au moins une unité plaque(s) (12) qui est conçue en tant que magnétorésistance de cuisson ou en tant que porte d'un appareil de cuisson et qui comprend au moins un sous-secteur (14) au niveau d'une surface (14), dans lequel le sous-secteur (16) est usiné au moins par fusion par laser (18), dans lequel de la matière nouvelle (20) est mise en place dans le sous-secteur (16), et dans lequel la matière nouvelle (20) est projetée au sein du au moins un rayon laser (22) produit par le laser (18), dans lequel l'unité plaque(s) (12) subit une fusion dans le sous-secteur (16) et/ou la matière nouvelle (20) est fondue au moyen du laser (18).

2. Procédé selon la revendication 1, dans lequel la matière nouvelle (20) est fondue par laser (18), **caractérisé en ce que** la matière nouvelle (20) est appliquée en tant que couche nouvelle (24) sur le sous-secteur (16).

3. Procédé selon l'une quelconque des revendications précédentes, **caractérisé en ce que** le sous-secteur (16) est usiné par laser (18) sur une grande surface.

4. Procédé selon l'une quelconque des revendications précédentes, **caractérisé en ce qu'**une dimension de structure inférieure à 100 µm est produite dans le sous-secteur (16).
